# EUROPÄISCHE PATENTSCHRIFT

(11) **EP 2 266 385 B1**
(45) Veröffentlichungstag und Bekanntmachung des Hinweises auf die Patenterteilung: **19.06.2013**
(21) Anmeldenummer: 10006512.7
(22) Anmeldetag: 23.06.2010
(51) Int. Cl.: A01D 75/18, A01F 29/16

(54) **Landwirtschaftliche Maschine mit einem Förderwerk und einem Fremdkörperdetektor**
Agricultural machine with a transporter and a foreign object detector
Machine agricole dotée d'un système convoyeur et d'un détecteur de corps étranger

(30) Priorität: 24.06.2009 DE 102009030493
(43) Veröffentlichungstag der Anmeldung: 29.12.2010
(73) Patentinhaber: CLAAS Saulgau GmbH, 88348 Bad Saulgau (DE)
(72) Erfinder: Pflanze, Sascha, 14822 Brück (DE); Prenzler, Jürgen, 88379 Unterwaldhausen (DE); Rauch, Hans, 88348 Bad Saulgau (DE); Schulze, Klaus, 01844 Hohwald (DE)
(74) Vertreter: Roth, Klaus

(56) Entgegenhaltungen:
- EP-A1- 1 632 128
- DE-A1- 4 129 113
- US-A- 3 972 156
- US-A- 4 531 118

## Beschreibung

Die Erfindung betrifft eine landwirtschaftliche Maschine, insbesondere Feldhäcksler oder dergleichen, mit einem Förderwerk zum Befördern von Erntegut und mit einem Fremdkörperdetektor, insbesondere Metalldetektor, zum Erfassen von Fremdkörperinformationen eines Fremdkörpers im Erntegut und von überlagerten Störinformationen nach dem Oberbegriff des Anspruchs 1 sowie ein entsprechendes Verfahren nach dem Oberbegriff des Anspruchs 13.

### Stand der Technik

Bisherige Kompensationsverfahren (vgl. EP 323 106) bei landwirtschaftlichen Maschinen wie Feldhäckslern oder dergleichen verwenden für ihre Metalldetektoren zur Ausfilterung von zyklischen Störspannungen jeweils die vom Metalldetektor ermittelten Werte der vorherigen Umdrehung und subtrahieren diese von den aktuell ermittelten Werten. Das Verfahren eignet sich nur für Vorgänge, bei denen die Drehzahl relativ konstant bleibt. Für den Anlauf der Einzugswalzen oder bei schnellen dynamischen Drehzahländerungen während des Betriebes eignet sich dieses Verfahren nicht.

So ist bereits ein verfahren bekannt, in dem sich zyklisch wiederholende Störspannungen durch analoge sowie digitale Subtraktion reduzieren lassen. Dadurch werden die Empfindlichkeit und die Zuverlässigkeit eines Metalldetektors verbessert. Der große Nachteil dieses Verfahrens ist, dass bei dynamischen Drehzahländerungen, wie zum Beispiel beim Einschalten des Antriebes oder bei schnellen Drehzahländerungen während des Betriebes, dieses Verfahren ebenso versagt. So wird eine Selbstauslösung des Metalldetektors bei diesen Betriebsbedingungen durch eine starke Reduzierung der Detektorempfindlichkeit verhindert, wodurch jedoch gegebenenfalls kleinere Fremdkörper bzw. Metallstücke nicht mehr erfasst werden und es zu Beschädigungen kommen kann.

In den US 5 600 941 und der US 5 600 942 wird ein Verfahren beschrieben, welches eine Detektorempfindlichkeitsreduzierung automatisch regelt. In den Phasen des Anlaufes oder bei schnellen Drehzahländerungen wird dabei die Empfindlichkeit kurzfristig herabgeregelt, was ebenfalls zu einer erhöhten Störanfälligkeit der Maschine infolge eines möglichen Metalleinzuges in dieser Phase führt.

Beispielsweise bei Feldhäckslern kann ein Metalleinzug zu einem ausgesprochen großen Schaden am Häckselwerk führen, der zum sofortigen Arbeitsabbruch und zu einer sehr teuren Reparatur zwingt.

### Aufgabe und Vorteile der Erfindung

Aufgabe der Erfindung ist es demgegenüber, eine landwirtschaftliche Maschine, insbesondere Feldhäcksler oder dergleichen, sowie ein Verfahren zum Betreiben einer landwirtschaftlichen Maschine mit einem Fremdkörperdetektor vorzuschlagen, die/das eine höhere Betriebssicherheit gewährleistet, insbesondere bei einer Änderung der Fördergeschwindigkeit und/oder Drehzahl bzw. bei einer positiven oder negativen Beschleunigung des Förderwerks.

Diese Aufgabe wird, ausgehend von einer landwirtschaftlichen Maschine bzw. einem entsprechenden Verfahren der einleitend genannten Art, durch die kennzeichnenden Merkmale der Ansprüche 1 bzw. 13 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße landwirtschaftliche Maschine dadurch aus, dass der Kompensationsspeicher ein nicht-flüchtiger bzw. permanenter oder semipermanenter Geschwindigkeitsspeicher zur Speicherung digitaler bzw. elektronischer Informationen mit einer im Kompensationsspeicher abgespeicherten, zugeordneten Fördergeschwindigkeit und/oder Drehzahl des Förderwerks ist, wobei die digitalen bzw. elektronischen Kompensationsinformationen mit einer zugeordneten Fördergeschwindigkeit und/oder Drehzahl des Förderwerks im Kompensationsspeicher abgespeichert sind.

Mit Hilfe einer derart vorteilhaften Zuordnung der Kompensationsinformation zu einer Fördergeschwindigkeit und/oder Drehzahl des Förderwerks wird gemäß der Erfindung ermöglicht, dass im Betrieb beispielsweise Ist-Störinformationen bei einer bestimmten bzw. aktuellen Fördergeschwindigkeit und/oder Drehzahl des Förderwerks in vorteilhafter Weise mit den gemäß der Erfindung im Geschwindigkeitsspeicher gespeicherten Kompensationsinformationen bei der gleichen oder bei einer ähnlichen bzw. entsprechenden Fördergeschwindigkeit und/oder Drehzahl des Förderwerks kompensierbar sind. Das bedeutet, dass die abgespeicherten Kompensationsinformationen mit zugeordneter bzw. zugehöriger, d.h. mit vorteilhaft verknüpfter Fördergeschwindigkeit und/oder Drehzahl des Förderwerks als Soll-Störinformationen verwendet werden können, mit denen die im Erntebetrieb auftretenden Ist-Störinformationen kompensierbar sind bzw. verglichen bzw. verrechnet/subtrahiert werden können.

Es hat sich in ersten Versuchen gezeigt, dass eine Zuordnung der Störinformationen des Förderwerks bzw. der landwirtschaftlichen Maschine oder deren verschiedenster Komponenten abhängig von der Fördergeschwindigkeit und/oder Drehzahl des Förderwerks sind und sich bei unterschiedlichsten Fördergeschwindigkeiten bzw. Drehzahlen zum Teil deutlich unterscheiden. Durch das Erfassen und Abspeichern dieser unterschiedlichsten Störinformationen für die Kompensation und vor allem durch deren erfindungsgemäße Verknüpfung bzw. Zuordnung zur/mit der jeweiligen Fördergeschwindigkeit bzw.

Drehzahl des Förderwerks kann im Betrieb, d. h. beim Fördern bzw. Verarbeiten von Erntegut, selbst bei Beschleunigungsvorgängen bzw. Änderungen der Fördergeschwindigkeit und/oder Drehzahl des Förderwerks eine ausgesprochen hohe Empfindlichkeit des Fremdkörperdetektors und somit Betriebssicherheit erreicht werden.

Dies kommt vor allem dadurch zustande, dass auch bei Beschleunigungsvorgängen diesen zu jedem Zeitpunkt eine bestimmte Geschwindigkeit bzw. Drehzahl zuordenbar ist. Diese kann dann in vorteilhafter Weise (als Ist-Drehzahl bzw. Ist-Geschwindigkeit) für die Kompensation verwendet werden. Das heißt, diese Geschwindigkeit bzw. Drehzahl mit den zugehörigen Ist-Störinformationen wird in vorteilhafter Weise für die Kompensation mit den abgespeicherten Soll-Störinformationen mit entsprechender, gespeicherter (Soll-)Drehzahl bzw. Geschwindigkeit gemäß der Erfindung verwendet.

Die Kompensation mit den abgespeicherten Kompensationsinformationen und somit Störinformationen in Abhängigkeit der Fördergeschwindigkeit und/oder Drehzahl des Förderwerks gemäß der Erfindung führt zu einer besonders hohen Empfindlichkeit des Fremdkörperdetektors nicht nur bei Beschleunigungsvorgängen, sondern auch bei konstanten Betriebsbedingungen.

Beispielsweise bei Anfahr- oder Bremsvorgängen des Förderwerks kann gemäß der Erfindung eine Empfindlichkeit des Fremdkörperdetektors erreicht werden, die durchaus vergleichbar ist mit der Empfindlichkeit von Fremdköperdetektoren bei konstanter Fördergeschwindigkeit und/oder Drehzahl des Förderwerks gemäß dem Stand der Technik. Demzufolge kann für Beschleunigungsvorgänge gegebenenfalls eine Änderung von Schwellwerten, bei denen der Fremdkörperdetektor anschlägt, entfallen oder nur unwesentlich verändert werden. Das heißt bei einem Schwellwert, bei dem ein Fremdkörper erfasst und entsprechende Maßnahmen wie z. B. Signalisierung und Stopp des Förderwerks ausgelöst wird bzw. erfolgt.

So ist der Kompensationsspeicher bzw. Geschwindigkeitsspeicher gemäß der Erfindung als nicht-flüchtiger bzw. permanenter oder semipermanenter Speicher ausgebildet. Als nicht-flüchtiger Speicher bzw. permanenter oder semipermanenter Speicher wird insbesondere ein Speicher zur Speicherung digitaler bzw. elektronischer Informationen gemäß der Erfindung verstanden. Hierbei gehen die Information im Normalfall nicht verloren, insbesondere auch nach dem Abschalten einer elektrischen Energieversorgung oder dergleichen.

Beispielsweise sind nachfolgend (unvollständig) aufgelistete und derzeit als nicht-flüchtige Speicher bzw. permanente oder semipermanente Speicher im Einsatz: ROM, PROM, EPROM, EEPROM, Flash-EEPROM, das heißt u. a. USB-Stick oder dergleichen, FRAM, MRAM, Face Change RAM, Speicherkarte, Flash-Speicher, Magnetband, Festplatte, Diskette, CD, DVD oder dergleichen. Hiermit können gemäß der Erfindung die Kompensationsinformationen, die mit der Fördergeschwindigkeit und/oder Drehzahl des Förderwerks verknüpft sind, d. h. auch diese entsprechend zugeordneten Informationen werden gemäß der Erfindung hiermit gespeichert, dauerhaft und unveränderbar oder überspielbar abgespeichert werden. Vorteilhafterweise können diese dann für die Kompensation der Störinformationen ausgelesen bzw. verwendet werden.

Vorzugsweise ist wenigstens ein Positions- bzw. Stellungssensor zum Erfassen der Stellung des Förderwerks vorgesehen. Hiermit kann die genaue Position bzw. Stellung des Förderwerks in vorteilhafter Weise erfasst werden. Es hat sich gezeigt, dass die Störinformationen abhängig von der Position bzw. Stellung des Förderwerks sind. Dementsprechend können die Störinformationen und/oder Kompensationsinformationen gemäß der Erfindung in Abhängigkeit von der Position bzw. Stellung des Förderwerks bzw. einzelner Bereiche und/oder des Mantels oder Umfangs des Förderwerks in vorteilhafter Weise vollständig und/oder bereichsweise zugeordnet und abgespeichert werden.

Vorteilhafterweise ist der Kompensationsspeicher ein Stellungsspeicher zum Speichern der Kompensationsinformationen mit der zugeordneten Stellung des Förderwerks. Es hat sich gezeigt, dass (zyklische) Störinformationen konkreten Stellen bzw. Positionen des Förderwerks zuzuordnen sind. Gemäß dieser vorteilhaften Variante der Erfindung können die Kompensationsinformationen in Abhängigkeit der entsprechenden Stellung abgespeichert und in vorteilhafter Weise mit Betriebsstörinformationen bzw. Ist-Störinformationen vor allem auch mit der zugeordneten Fördergeschwindigkeit und/oder Drehzahl des Förderwerks gemäß der Erfindung kompensiert bzw. verglichen/verrechnet werden.

Das bedeutet, dass die Störinformationen im Betrieb einer entsprechenden Stellung des Förderwerks zugeordnet werden können und diese mit den abgespeicherten Kompensationsinformationen bei entsprechender, d. h. vor allem nahezu identischer Stellung, kompensierbar bzw. vergleichbar/verrechenbar sind. Hierdurch wird eine besonders hohe Qualität der Kompensation erreichbar, so dass der Fremdkörperdetektor eine ausgesprochen hohe Empfindlichkeit und Betriebssicherheit aufweist.

In einer besonderen Weiterbildung der Erfindung sind die Kompensationsinformationen in einer Normierungsphase erfasste Normierungsstörinformationen mit einer zugeordneten Fördergeschwindigkeit und/oder Drehzahl des Förderwerks. Die Erfassung der Kompensationsinformationen in einer Normierungsphase in Form von Normierungs-Störinformationen mit zugeordneter Fördergeschwindigkeit und/oder Drehzahl des Förderwerks, in der möglichst kein Erntegut und somit auch kein Fremdkörper bzw. Metallelement vom Förderwerk gefördert werden kann, gewährleistet, dass im Wesentlichen ausschließlich Störungen bzw. Störinformationen des Förderwerks bzw. der landwirtschaftlichen Maschine erfasst und in vorteilhafter Weise gemäß der Erfindung im Kompensationsspeicher bzw. Geschwindigkeitsspeicher bzw. Stellungsspeicher abgespeichert werden können. Diese "Hintergrund-" bzw. "reine" Störinformationen des Förderwerks bzw. der landwirtschaftlichen Maschine können dann gemäß der Erfindung im (Ernte-) Betrieb, d. h. beim Befördern von Erntegut, in vorteilhafter Weise zur Kompensation bzw. zum Vergleich bzw. Verrechnen verwendet bzw. herangezogen werden.

Die Normierungsphase, d. h. auch als sog. "Lernphase" bezeichenbar, kann manuell oder (halb-) automatisiert beispielsweise der Hersteller vor der Auslieferung an den Kunden im Werk und/oder der Benutzer der landwirtschaftlichen Maschine gemäß der Erfindung vor der Ernte, gegebenenfalls sogar vor jedem Ernten eines landwirtschaftlichen Feldes, durchführen.

Es ist denkbar, dass die Normierungsphase durch Betätigen eines Schalters oder dergleichen nahezu automatisch abläuft, d. h. beispielsweise dass die Störinformationen bei iner vorgegebenen bzw. bestimmten Fördergeschwindigkeit und/oder Drehzahl des Förderwerks erfasst und in vorteilhafter Weise gemäß der Erfindung abgespeichert werden. Dies kann beispielsweise für eine einzige Kompensations-Fördergeschwindigkeit und/oder -Drehzahl des Förderwerks erfolgen oder für mehrere Fördergeschwindigkeiten und/oder Drehzahlen. Beispielsweise werden Störinformationen bzw. Kompensationsinformationen für mehrere Fördergeschwindigkeiten und/oder Drehzahlen des Förderwerks aufgenommen, die z. B. gleichmäßig über den Drehzahlbereich bzw.
Fördergeschwindigkeitsbereich des Förderwerks verteilt sind. Zum Beispiel erfolgt die Aufnahme von Störinformationen bzw. Kompensationsinformationen bei Drehzahlen des Förderwerks von 50, 100, 150, 200 und 250 Umdrehungen pro Minute (U/min), Z. B. fortlaufend bis zur maximalen Drehzahl des Förderwerks.

Bei Verwendung vorteilhafter Speicher mit entsprechend großer Speicherkapazität können durchaus auch kleinere (Drehzahl-) Schritte realisiert werden, wobei die jeweiligen Störinformationen mit den jeweiligen Fördergeschwindigkeiten und/oder Drehzahlen des Förderwerks erfasst und abgespeichert werden. In ersten Versuchen hat sich gezeigt, dass je kleiner die Schritte sind, umso qualitativ besser kann die Kompensation und somit umso höher kann die Betriebssicherheit des Fremdkörperdetektors gemäß der Erfindung werden.

Vorteilhafterweise sind innerhalb einer Arbeitsphase des Förderwerks die Normierungs-Störinformationen unverändert im Kompensationsspeicher abgespeichert. Hiermit wird erreicht, dass die Kompensationsinformationen mit zugeordneter Fördergeschwindigkeit und/oder Drehzahl des Förderwerks zumindest innerhalb einer Arbeitsphase, die wenigstens eine Erntephase der landwirtschaftlichen Maschine ist, unverändert bleibt.

Gegebenenfalls werden die Normierungs-Störinformationen nach einigen Arbeitseinsätzen und/oder Wochen bzw. Monaten verändert bzw. überschrieben. Es hat sich nämlich gezeigt, dass- beisplelsweise bei einem Feldhäcksler durch die großen Kräfte, die das Erntegut auf die Förderwalzen ausübt, das Förderwerk bzw. die Förderwalze allmählich beeinträchtigt bzw. verbeult wird, wodurch sich die Störinformation des Förderwerks etwas verändern. Dies ist auch bei einem Austausch von Komponenten bzw. (Ersatz-) Teilen von Vorteil.

Aufgrund dessen ist es vorteilhaft, bei z.B. entsprechend beeinträchtigtem/verbeultem Förderwerk durchaus von Zeit zu Zeit eine Art "Up-Date" bzw. "Reset" bzw.
Aktualisierung/Erneuerung, d.h. ein "Neu-Lernen" der Kompensationsinformationen mit zugeordneter
Fördergeschwindigkeit und/oder Drehzahl des Förderwerks sowie insbesondere mit zugeordneter Stellung des Förderwerks durchzuführen bzw. diese neu abzuspeichern. Das heißt, das Förderwerk bzw. die landwirtschaftliche Maschine neu zu normieren, insbesondere in einer Normierungsphase ohne Förderung von Erntegut.

Die Normierungs-Störinformationen stellen gemäß der Erfindung eine Art Abbild des "Störhintergrunds" bzw. "Hintergrundrauschens" dar, der/das im Wesentlichen unverändert, jedoch aufgrund von Beeinträchtigungen des Förderwerks bzw. der landwirtschaftlichen Maschinen durchaus in größeren Zeitabständen eine gewisse Veränderung aufweisen kann. Dem wird durch eine entsprechende Anpassung der Normierungs-Störinformationen aufgrund des Betriebs der landwirtschaftlichen Maschine in vorteilhaften Zeitabständen bzw. regelmäßigen Zeitabständen Rechnung getragen.

Vorteilhafterweise umfasst der Geschwindigkeitsspeicher wenigstens erste Normierungs-Störinformationen mit zugeordneter erster Fördergeschwindigkeit und/oder erster Drehzahl sowie zweite Normierungs-Störinformation mit zugeordneter zweiter Fördergeschwindigkeit und/oder zweiter Drehzahl des Förderwerks.

In einer bevorzugten Variante der Erfindung weist ein Gesamtbereich vom Stillstand bis zur maximalen Fördergeschwindigkeit und/oder Drehzahl des Förderwerks mehrere Geschwindigkeitsabschnitte auf, wobei innerhalb eines jeden Geschwindigkeitsabschnitts einheitliche Kompensationsinformationen und/oder Normierungs-Störinformationen mit zugeordneter Fördergeschwindigkeit und/oder Drehzahl vorgesehen sind bzw. zur Kompensation der Betriebs- bzw. Ist-Informationen verwendet/verrechnet werden.

Vorzugsweise weisen die Geschwindigkeitsabschnitte unterschiedliche Kompensationsinformationen und/oder Normierungs-Störinformationen mit zugeordneter unterschiedlicher Fördergeschwindigkeit und/oder Drehzahl auf.

Bevorzugt sind den ersten Normierungs-Störinformationen erste Stellungsinformationen und den zweiten Normierungs-Störinformierung zweite Stellungsinformationen zugeordnet. Grundsätzlich ist von Vorteil, beispielsweise bei einem rotierenden Förderwerk eine volle Umdrehung, d. h. 360°, in unterschiedliche Abschnitte bzw. Bereiche aufzuteilen. Beispielsweise können 10, 20, 25, 40 oder 50 Abschnitte vorgesehen werden, die einer jeweiligen Stellung des Förderwerks zugeordnet werden. Die Kompensationsinformation bzw. Normierungs-Störinformationen können in vorteilhafter Weise den entsprechenden Abschnitten bzw. Umfangsbereichen, d.h. Winkelstellungen des Förderwerks, zugeordnet und in vorteilhafter Weise gemäß der Erfindung abgespeichert werden.

Generell ist denkbar, aufgrund der bislang ausreichenden Empfindlichkeit der Fremdkörperdetektoren gemäß dem Stand der Technik bei konstanter bzw. nahezu konstanter Drehzahl bzw. Fördergeschwindigkeit des Förderwerks bei entsprechend konstanter bzw. leicht im Betrieb sich verändernden Drehzahl bzw. Fördergeschwindigkeit des Förderwerks eine herkömmliche Kompensation durchzuführen, Beispielsweise kann eine derartige "statische" Kompensation bei Änderungen der Fördergeschwindigkeit und/oder Drehzahl des Förderwerks innerhalb eines Toleranzbereichs von ggf. 10 % in herkömmlicher Weise durchgeführt werden.

Vorzugsweise ist ein Beschleunigungssensor bzw. eine Vorrichtung zum Erfassen einer Beschleunigung oder einer Beschleunigungsphase des Förderwerks vorgesehen. Hiermit wird erreicht, dass zwischen einer Beschleunigungsphase und einem weitgehend konstanten Betrieb des Förderwerks in vorteilhafter Weise unterschieden werden kann, um gegebenenfalls unterschiedliche Kompensationsverfahren/-techniken für die unterschiedlichen Phasen einzusetzen.

Grundsätzlich ist denkbar, dass das erfindungsgemäße Verfahren bzw. die Verwendung der im Geschwindigkeitsspeicher abgespeicherten Kompensationsinformation mit zugeordneter Fördergeschwindigkeit und/oder Drehzahl des Förderwerks und/oder Stellung des Förderwerks sowohl in einer Beschleunigungsphase als auch in einer weitestgehend konstanten Förderphase des Förderwerks zum Kompensieren verwendet wird. Das heißt die erfindungsgemäß gespeicherten Kompensationsinformationen mit zugeordneter Geschwindigkeit/Drehzahl werden immer verwendet und somit wird in nahezu keinem Fall (außer ggf. im Notfall bei beeinträchtigtem Geschwindigkeitsspeicher) eine Kompensation gemäß dem eingangs genannten Stand der Technik durchgeführt, selbst bei annähernd konstantem Betrieb des Förderwerks.

Vorzugsweise ist die Kompensationseinheit derart ausgebildet, dass wenigstens innerhalb der Beschleunigungsphase des Förderwerks die Störinformationen mit den Normierungs-Störinformationen wenigstens teilweise kompensiert werden. Gerade hier musste bislang gemäß dem Stand der Technik eine Einschränkung der Empfindlichkeit des Fremdkörperdetektors in Kauf genommen werden, was jedoch gemäß der Erfindung nicht mehr bzw. nur in sehr geringem Maß notwendig ist. Es hat sich nämlich gezeigt, dass gemäß der Erfindung nicht nur in einer konstanten bzw. nahezu konstanten Förderphase des Förderwerks, sondern auch in einer Beschleunigungsphase ein vergleichsweise niedriger Schwellwert, gegebenenfalls ein einheitlicher bzw. einziger Schwellwert verwendbar ist.

Dementsprechend hoch ist die Empfindlichkeit nicht nur bei statischer Betriebsweise, sondern auch bei einer beschleunigenden bzw. bremsenden Betriebsweise des Förderwerks. Dies ist vor allem beim Anfahren des Förderwerks bzw. Schneidwerk eines Feldhäckslers von entscheidender Bedeutung, der beispielsweise bereits nach einer dreiviertel Umdrehung auf maximaler Drehzahl von knapp 400 Umdrehungen in der Minute ist.

Bislang war die Detektion gerade beim Anfahren entsprechender Feldhäcksler mit vergleichsweise schlechter Fremdkörperdetektion verbunden. Dies wird gemäß der Erfindung im wesentlichen vermieden. Dies bedeutet, dass selbst in einem derartigen Anwendungsfall eine hohe Empfindlichkeit bzw. Betriebssicherheit des Fremdktörperdetektors gemäß der Erfindung verwirklicht wird.

Vorteilhafterweise weist die Kompensationseinheit wenigstens eine Verschiebeeinheit zum Verschieben der Stellung bzw. der Winkel-Positionen der Kompensationsinformationen um eine vorteilhafte (Winkel-)Positions- bzw. Stellungsdifferenz auf. Beispielsweise wird ein sich drehendes Förderwerk wie eine Förderwalze für ein Häckselwerk eines Feldhäckslers in mehrere Segmente bzw. Winkelabschnitte eingeteilt und entsprechende Kompensationsinformationen Segment weise bzw. abschnittsweise erfasst bzw. gespeichert und in vorteilhafter Weise verwendet bzw. kompensiert. Es hat sich gezeigt, dass mit zunehmender Fördergeschwindigkeit bzw. Drehzahl des Förderwerks eine Verschiebung der Störinformationen auftritt. Mit Hilfe der vorgenannten Maßnahme wird nun erreicht, dass diese Verschiebung in und/oder entgegen der Förderrichtung des Förderwerkes bzw. auf der Mantelfläche des Förderwerks durch Verschieben der Kompensationsinformation bzw. der Normierungs-Störinformationen um eine vorteilhafte Stellungsdifferenz, d.h. beispielsweise um 7°, 10° etc., bei einem rotierendem Förderwerk, eine verbesserte Kompensation erreicht. Dies wird dadurch möglich, dass eine verbesserte Deckung der abgespeicherten und vorteilhaft verschobenen Kompensationsinformationen mit den Störinformationen im Betrieb, d. h. den Ist-Störinformationen, erreicht wird.

Vorzugsweise weist die Kompensationseinheit wenigstens eine Wertänderungseinheit zum Ändern der Wertgröße der Kompensationsinformation und/oder Normierungs-Störinformation auf. Es hat sich ebenfalls gezeigt, dass bei zunehmender Fördergeschwindigkeit und/oder Drehzahl des Förderwerks nicht nur eine entsprechende Verschiebung der Störinformation auftritt, sondern auch eine Änderung der Amplitude bzw. der Wertgröße der Störinformation im Betrieb bzw. der Ist-Störinformationen. Mit Hilfe der vorteilhaften Wertänderungseinheit wird nun erreicht, dass eine Anpassung des Wertes/der Größe/der Amplitude der Kompensationsinformationen an die sich ändernde Größe der Ist-Störinformation im Betrieb eine verbesserte Kompensation gewährleistet. So wird hiermit erreicht, dass eine verbesserte Kompensation durch eine größere Übereinstimmung der in vorteilhafter Weise angepassten, gespeicherten Kompensationsinformation bzw. Normierungs-Störinformation mit den Störinformationen im Betrieb bzw. Ist-Störinformation erreicht wird.

Generell können unterschiedlichste Inkrementalgeber bzw. Positionskodierer oder dergleichen zur Erfassung der Position bzw. Stellung des Förderwerks verwendet werden. Vorzugsweise werden Inkrementalgeber mit Hallelementen oder dergleichen verwendet, da diese gerade bei Anwendungen wie in der Landwirtschaft mit viel Staub etc. vergleichsweise störunempfindlich sind. Es können jedoch durchaus auch optische Positionskodierer wie Lichtschrankensysteme, zum Beispiel mit Leuchtdioden/Infrarotleuchtdioden oder dergleichen sowie mit Fotozellen vorgesehen werden.

Es hat sich in ersten Versuchen gezeigt, dass beispielsweise bei einem rotierenden Förderwerk bzw. einer Förderwalze für ein Schneidwerk eines Feldhäckslers etwa 25 Segmente/Abschnitte, d.h. 25 möglichst gleichmäßig verteilte Positionen ausreichend genau sind.

Grundsätzlich können sowohl digitale als auch analoge Inkrementalgeber bzw. Positionskodierer verwendet werden. Gegebenenfalls kann zur Weiterverarbeitung entsprechender Analogsignale ein A/D-Wandler oder dergleichen verwendet werden, so dass eine digitale Speicherung in vorteilhafter Weise vorgesehen werden kann. Hierbei kann wiederum beispielsweise ca. 25 unterschiedlichste Segmente/Abschnitte pro Umfang, d.h. pro 360°, verwendet werden.

Generell ist die Verwendung einer elektronischen Kontrolleinheit bzw. eines elektronischen Prozessors oder dergleichen zur Verarbeitung der gespeicherten und im Betrieb kontinuierlich anfallenden Informationen von Vorteil. Die elektronische Kontrolleinheit führt in vorteilhafter Weise die elektronische Kompensation durch, d. h. die entsprechenden Rechnungen/Vergleiche.

Grundsätzlich kann mit Hilfe der Erfindung die eingangs genante Herabsetzung der Empfindlichkeit, hier als Empfindlichkeitsreduzierung bezeichnet, bei beschleunigenden bzw. sich dynamisch ändernden Vorgängen gemäß dem Stand der Technik vermieden werden. Dazu wird ein erfindungsgemäßes Verfahren, hier auch als sogenannte "dynamische Kompensation" bezeichnet, eingesetzt. Dieses Verfahren erlaubt die Beibehaltung der vollen Empfindlichkeit eines Metalldetektors selbst bei dynamischen Drehzahländerungen des Förderwerks bzw. des Antriebes.

Gemäß der Erfindung ist es möglich, bei Inbetriebsetzung des Antriebes der Einzugswalzen eines Feldhäckslers, in dem ein Metalldetektor integriert ist, während der Beschleunigungsphase oder bei schnellen Drehzahländerungen aufgrund unterschiedlicher Erntegutströme, die Empfindlichkeit dieses Metalldetektors ohne Einbuße der Auflösungsqualität bei tatsächlich bedeutsamen und signifikanten Störsignalen aufrecht zu erhalten.

Das erfindungsgemäße Verfahren sieht insbesondere vor, dass mindestens eine Kompensationsinformation, d. h. insbesondere eine sogenannte Lernkurve", gespeichert wird und vorzugsweise die exakte Position des zyklischen Vorganges ermittelbar ist. Durch die Ermittlung einer Beschleunigung bzw. differentiellen Drehzahl dn/dt bzw. eines Geschwindigkeitssgradienten erfolgt bei schnellen Drehzahländerungen eine Kompensation mit Hilfe der Normierungs- bzw. Lernkurvenwerte. Diese Lernkurvenwerte werden entsprechend der gerade vorliegenden Drehzahl in der momentanen Phase und in der Amplitude angepasst. Ist diese Drehzahländerungsphase beendet, wird beispielsweise automatisch auf die normale Kompensation mit Hilfe der vorherigen Umdrehung der Einzugswalze umgeschaltet, wie dies gemäß dem eingangs genannten Stand der Technik bereits durchgeführt wird.

Durch das erfindungsgemäße Verfahren kann bei voller Metalldetektorempfindlichkeit der Einzug der Maschine in Betrieb gesetzt werden und die Drehzahl der Walzen während des Betriebes zügig geändert werden, ohne eine Stopp-Fehlauslösung zu erhalten. Dadurch ist auch ein Einsatz von preisgünstigeren und damit weniger hochwertigem antimagnetischem Stahl für die Elemente im Bereich des Metalldetektors möglich.

In drehzahlkonstanten Phasen des Betriebs wird z. B. das bekannte Kompensationsverfahren angewandt, bei dem eine positionsgenaue Subtraktion der Störspannungen der vorherigen Umdrehung von dem aktuellen Störspannungswert erfolgt. Dieses Verfahren wird im Weiteren als sogenannte "statische Kompensation" bezeichnet.

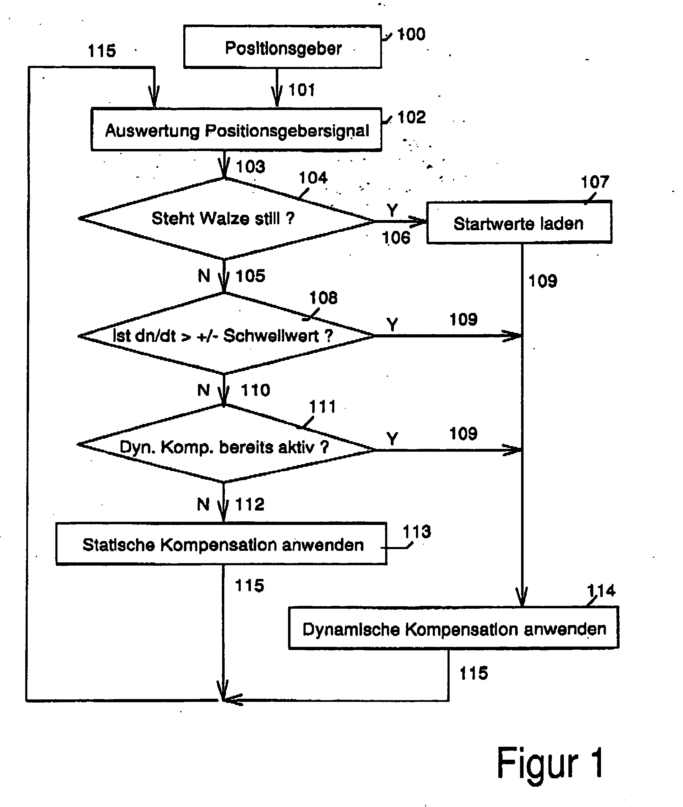

Der logische Rechenablauf bei der statischen Kompensation der Störwerte (vgl. Figur 1, 113) verläuft ähnlich der beschriebenen Methode in der US 4 854 113.

Die Störwerte der vorangegangenen Umdrehung werden nur kurzzeitig, jedoch ohne eine zugeordnete/zugehörige Drehzahl gespeichert und von den aktuellen Störwerten (ohne Kenntnis bzw ohne Erfassung der Drehzahl) positionsgenau subtrahiert. Das Ergebnis dieser Subtraktion ist dann nahezu Null. Neu an der erfinungsgemäßen Methode ist hingegen auch, dass das Ergebnis der Subtraktion als vorzeichenfreier Betrag gebildet wird. Damit wird nur ein Schwellwert für die Stoppauslösung benötigt, dessen Wert keinen Offset beinhaltet.

Diese Methode ist unabhängig von der Drehzahl, funktioniert aber nur sicher bei relativ konstanten Drehzahlen mit Drehzahländerungen kleiner 15 % pro Umdrehung. Deshalb sollte zumindest bei Drehzahländerungen von über 10 % pro Umdrehung die sogenannte "dyriamische Kompensation" gemäß der Erfindung eingesetzt werden.

Bei der statischen Kompensation wird durch das umdrehungsversetzte Subtraktionsverfahren jede äußere Störung zweimal registriert. Einmal wird die Störung in Echtzeit direkt beim Auftreten und einmal als Echo in der folgenden Umdrehung im Kompensationsergebnis sichtbar.

Es ist gemäß der Erfindung von Vorteil zur sogenannten dynamischen Kompensation eine möglichst genaue Kenntnis der Walzenstellung/-position zu haben, d. h. die momentane Drehwinkellage. Diese Information wird in vorteilhafter Weise durch einen Ingrementalgeber bzw. Positionsgeber geliefert, der die Walze um den im Inneren darin eingeschlossenen Metalldetektor, abtastet. Um möglichst einen Absolutwert der Walzenposition zu erhalten, ist entweder zur Positionserkennung ein Absolutwertgeber oder ein Inkrementalgeber mit zugehörigem Walzensynchronisiersignal, zu verwenden. Die Stellung bzw. Position des Förderwerks bzw. der Walze ist möglichst auch nach einem Abschalten des Förderwerks und/oder der landwirtschaftlichen Maschine zu kennen bzw. gemäß der Erfindung mittels eines nicht-flüchtigen bzw. semipermanenten Speichers zu speichern.

### Ausführungsbeispiel

Ein Ausführungsbeispiel der Erfindung ist in der Zeichnung dargestellt und wird anhand der Figuren nachfolgend näher erläutert.

Anhand eines ersten Ausführungsbeispieles vor allem für einen selbst fahrenden Feldhäcksler ähnlich der Patentschrift DE196 20 526, in dem vorzugsweise in einer vorderen unteren Zuführwalze ein Metalldetektor eingebaut ist und in vorteilhafter Weise ein Positionsgeber mit z.B. 24 oder 48 Positionen pro Walzenumdrehung an eben dieser Walze die absoluten Positionswerte der Walze erfasst werden, soll nachfolgend die Wirkungsweise der sogenannten "dynamischen Kompensation" von Störwerten gemäß der Erfindung erläutert werden. Das heißt, insbesondere bei einer Beschleunigung der Walze, die vorzugsweise um mehr als 10 % variiert.

Vorteilhaft ist, wenn der Metalldetektor u.a. einen Mikroprozessor umfasst, der beispielsweise mittels eines A/D-Wandlers die (analogen) Informationen bzw. Spannungen der Detektorspulen digitalisiert. Ebenfalls ist gemäß der Erfindung in einer Elektronikeinheit ein nicht-flüchtiger Speicher vorhanden, der notwendige Informationen/parameter (semi-)permanent speichern kann.

Während des Betriebes des Metalldetektors läuft im Mikroprozessor des Metalldetektors das in Figur 1 aufgezeichnete Logikprinzip ab. Ein Positionsgeber 100 speist seine Informationen 101 in den Mikroprozessor 102 ein. Dieser Mikroprozessor 102 führt auch die witerführenden 103 logischen Entscheidungen und Aktionen 104 bis 115 durch

Als erstes wird vorzugsweise durch das Messen der Abstandszeit von einer Walzenposition zur nächsten Walzenposition 104 geprüft, ob die Walze stillsteht. Ist dies der Fall 106, so werden in vorteilhafter Weise aus dem integrierten Festwertspeicher 107 die Startwerte 109 geladen, die für einen folgenden Anlauf der Walze benötigt werden. Eine Aktivierung der dynamischen Kompensation 114 wird mittels des Signals 109 eingeleitet.

Ergibt eine vorteilhafte Prüfung 104, dass die Walze nicht still steht 105, so folgt insbesondere die Prüfung 108, ob die Walze beschleunigt wird. Die dabei ermittelte Beschleunigung dn/dt wird bei einem positiven Wert eine Drehzahlerhöhung und bei einem negativem Wert eine Drehzahlreduzierung anzeigen. Überschreitet hierbei die Beschleunigung dn/dt einen definierten positiven bzw. negativen Schwellwert, so wird die dynamische Kompensation 114 über das Signal 109 eingeleitet.

Wird dieser Schwellwert in 108 nicht überschritten 110, so folgt in vorteilhafter Weise als nächstes die Überprüfung 111, ob z. B. die dynamische Kompensation bereits aktiv ist. Die dynamische Kompensation läuft nach ihrer Aktivierung beispielsweise eine festgelegte Positionsanzahl lang weiter. Ist diese Positionsanzahl noch nicht erreicht, die dynamische Kompensation somit noch aktiv, so folgt der Sprung 109 sofort wieder zur dynamischen Kompensation 114.

Alternativ hierzu kann in einer besonderen Weiterbildung der Erfindung die sog "dynamische Kompensation" gemäß der Erfindung immer erfolgen. Das heißt, hierbei ist eine entsprechende Prüfung, ob "statisch" oder "dynamisch" bzw. ob noch "aktiv" oder nicht, in vorteilhafter Weise entbehrlich sein.

Ist hingegen die Drehzahl der Walze in gewissen Grenzen konstant und die dynamische Kompensation nicht aktiv, so wird mittels des Signals 112 wie beim Stand der Technik die statische Kompensation 113 der Störspannungen aktiviert. Das Signal 115 aktiviert eine erneute Auswertung des Positionsgebersignals in 101.

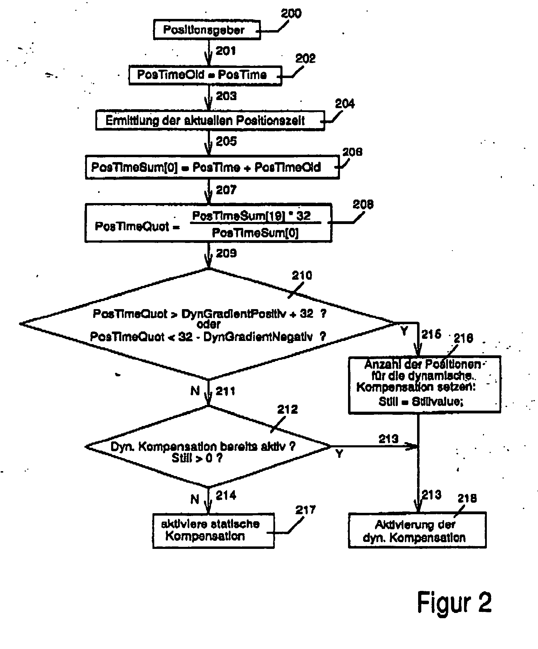

In Figur 2 ist schematisch der logische Ablauf eines möglichen Beispiels zur Ermittlung der Beschleunigung dn/dt dargestellt. Wenn der Positionsgeber 200 dem Prozessor im Metalldetektor einen neuen Positionswert 201 mitteilt, läuft vorzugsweise nachfolgender Vorgang ab.

Im ersten Schritt 202 wird die zuletzt ermittelte Zeitdifferenz PosTime zwischen zwei aufeinander folgenden Positionen als PosTimeOld gespeichert. Danach 203 wird die aktuelle Positionszeit aus einem Timer des Prozessors 204 als neue PosTime ausgelesen. Nun wird die Summe der beiden letzten Positionszeiten gebildet 206 und als Element PosTimeSum[0] in einem Stapelspeicher (FIFO-Prinzip) für z. B. 20 Elemente (PosTimeSum[0] ... PosTimeSum[19]), abgelegt. Infolge des Ablegens des neuen Elementes PosTimeSum[0] im Stapelspeicher werden alle Elemente dieses Speichers beispielsweise um eine Position weitergeschoben und das letzte Element PosTimeSum[19] fällt heraus. Durch diese Summenbildung der aktuellen und der vorherigen Positionszeit wird jeweils ein geradzahliger mit einem ungradzahligen Wert addiert. Dadurch wird die Fehlerstreuung des Positionszeitwertes wesentlich verringert.

Anschließend wird vorzugsweise der Quotient PosTimeQuot in 208 ermittelt, der die Bezugsgröße zur Beschleunigung der Drehzahl darstellt. Dafür wird insbesondere das letzte Element aus dem vorher aktualisierten Stapelspeicher 206 PosTimeSum[19] mit 32 multipliziert und durch den aktuellen Wert PosTimeSum[0] dividiert. Durch dieses Vorgehen vermeidet man in vorteilhafter Weise im Mikroprozessor Fließkommazahlen und spart damit wertvolle Rechenzeit. Die geometrische Drehwinkeldifferenz der Walze bei der Quotientenbildung zwischen den beiden verrechneten Positionszeiten (PosTimeSum[19] bis PosTimeSum[0]) beträgt bei 48 Positionen pro Walzenumfang etwa 0,4 Umdrehungen. Bei gleich bleibender Drehzahl ist die Beschleunigung Null und das Ergebnis PosTimeQuot 209 wird den Wert 32 haben.

Es folgt in vorteilhafter Weise die Auswertung 210 des ermittelten Quotienten 209. Dazu wird dieser vorzugsweise mit den Grenzwerten DynGradientPositiv und DynGradientNegativ, inklusive dem Offsetwert von 32, verglichen. Diese Grenzwerte legen fest, bei welchem Beschleunigungswert die dynamische Kompensation einsetzt. Wird einer dieser Grenzwerte in 210 überschritten, so wird mittels des Signals 215 die dynamische Kompensation 218 für eine bestimmte Positionsanzahl 216 aktiviert. In 216 wird dazu die Variable Still mit einem festgelegten Wert Stillvalue beschrieben, der die Anzahl der Positionen für die Dauer der dynamischen Kompensationsphase angibt. Über das Signal 213 wird nun die dynamische Kompensation 218 aktiviert. Läuft bereits eine dynamische Kompensationsphase, so wird die Variable Still wieder auf den Anfangswert Stillvalue hoch gesetzt und die Dauer der dynamischen Kompensation verlängert sich entsprechend.

Werden die Grenzwerte in 210 nicht überschritten 211, so wird als nächstes in 212 mittels der Variablen Still (Still > 0 ?) geprüft, ob die dynamische Kompensation bereits aktiv ist. Ist dies der Fall 213, so wird direkt zur dynamischen Kompensation 218 gesprungen. Ansonsten 214 wird die normale statische Kompensation 217 eingeleitet.

Wesentlicher Bestandteil der Erfindung ist unter anderem das drehzahlgenaue Speichern einer sogenannten "Lernkurve" bzw. der Normierungs informationen und das Festlegen von Drehzahl-Teilbereichen, in denen z. B. fest definierte Phasen- und Amplitudenwerte gelten.

Bei der dynamischen Kompensation wird, analog der statischen Kompensation, ein Korrekturwert vom aktuell gemessenen Spulensignal des Metalldetektors subtrahiert. Bei der statischen Kompensation ergibt sich dieser Korrekturwert aus den zwischengespeicherten Werten der vorherigen Umdrehung der Walze. Bei der dynamischen Kompensation dagegen, wird dieser Korrekturwert aus einer fest gespeicherten "Lernkurve" berechnet. Dabei ist, entsprechend der gerade aktuell anliegenden Drehzahl, diese "Lernkurve" in einer vorteilhaften Variante der Erfindung in Phase und/oder Amplitude anzupassen.

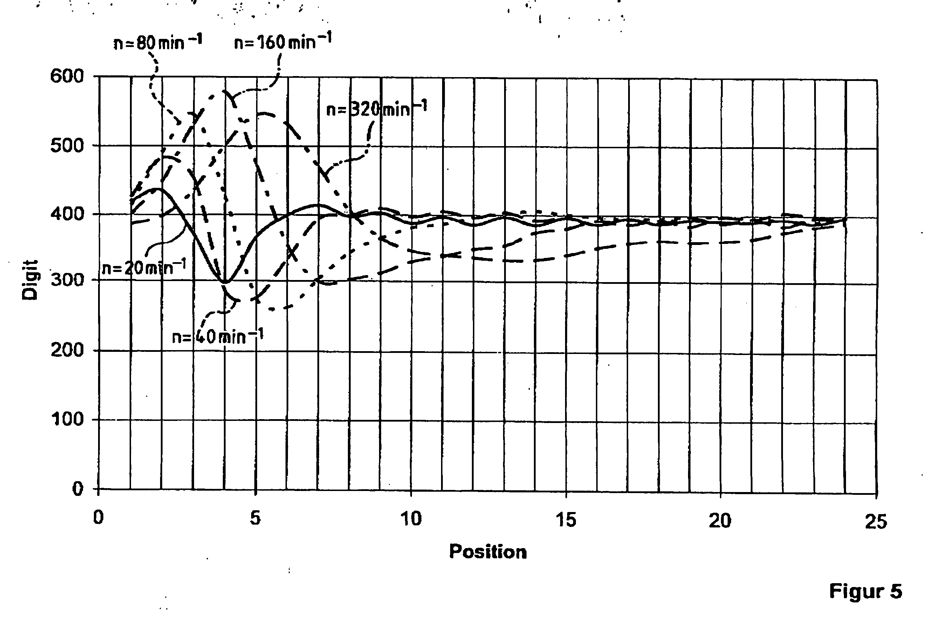

Grund für diese Phasenverschiebung und/oder der Amplitudenänderung über einen großen Drehzahlbereich hinweg, sind physikalische Effekte, wie zum Beispiel bei der Auf- und Entmagnetisierung von magnetisierbaren Störinseln, von Wirbelstromeff ekten sowie durch die Frequenzgänge des Detektorsystems aus Spulen und vorverstärker etc. Die Änderungen der Phase (Position) und/oder der Amplitude (Wertgröße) von Störinformationen/-signalen sind u. a. in Figur 5 für fünf unterschiedliche Drehzahlen erkennbar, z. B. das Wandern der Scheitelpunkte der unterschiedlichen Kurven sowohl in der Höhe (Amplitude) als auch in der Position/Lage (Phase).

Die in ihrem Drehzahlpunkt (richtig) gewählte Lage der Lernkurve entscheidet z. B. wesentlich über die Qualität der Störminderung beim dynamischen Kompensationsverfahren. Günstigerweise wird diese (eine) Lernkurve z. B. etwa in der Mitte des Arbeitsdrehzahlbereiches der Walze aufgenommen.

Die Aufnahme der Lernkurve erfolgt vorzugsweise bei einer genau definierten Kompensations-Drehzahl nk. Mittels eines speziellen Software-Tools wird dazu z. B. die Stoppauslösung des Metalldetektors für kurze Zeit deaktiviert, um sicher die geforderte Kompensationsdrehzahl der Walze einstellen zu können. Danach erfolgt z. B. per Softwarebefehl der Start zum resistenten Speichern der aufgenommenen Störwerte für genau eine Umdrehung. Im Anschluss daran wird z. B. die Stoppauslösung des Netalldetektors wieder aktiviert.

Ist diese beispielhafte Lernkurve aufgenommen, so sollte z. B. einmalig für eine Erzeugnis-Serie für jeden Drehzahlpunkt innerhalb des Arbeitsbereiches der günstigste Phasen- und Amplitudenwert ermittelt werden der bei einer dynamischen Kompensation den niedrigsten Ergebniswert (A_CompRes) liefert. Diese gewonnenen Werte sind ausschließlich spezifisch für den eingesetzten Metalldetektortyp. Sie gelten jedoch für alle individuellen Walzen einer Serie.

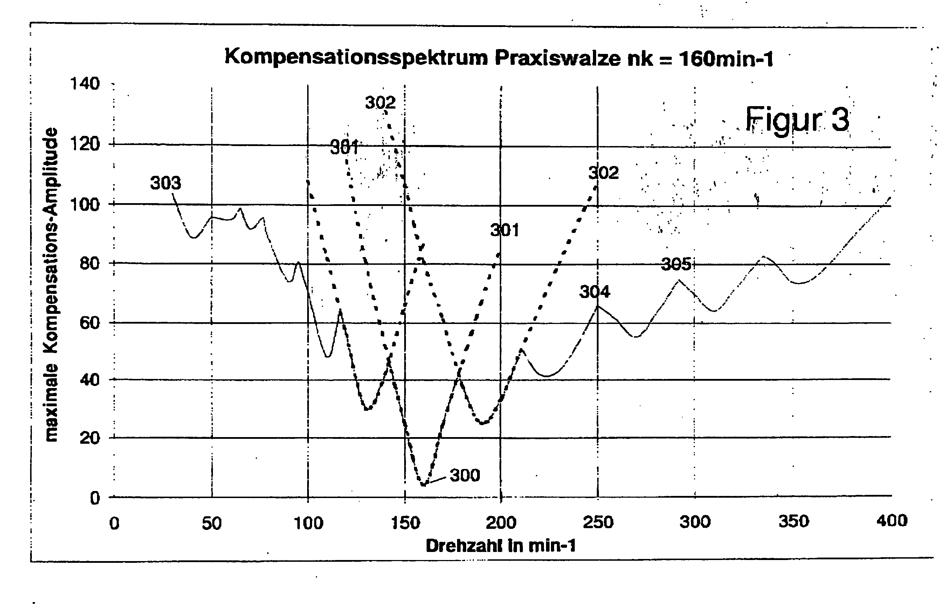

In Figur 3 ist ein praktisch aufgenommenes "Kompensationsspektrum" als Beispiel dargestellt. Darin verdeutlicht die Kurve 301 den maximalen Fehler bei der Kompensation mittels der entsprechenden Lernkurve mit einer Phasenverschiebung von Null und einem Wert von 100 % der Amplitude. Wird mit diesen Werten kompensiert, d. h. mit den Originalwerten der Lernkurve, die z. B. bei nk = 160 U/min 300 aufgenommen wurden, so ergeben sich bei einer Variation der Walzendrehzahl die in Kurve 301 ermittelten maximalen Fehler der Kompensation. Es zeigt sich, dass bereits bei geringer Drehzahlabweichung von nk (160min-1) das Kompensationsergebnis deutlich schlechter wird.

Wird nun nicht mit den Originalwerten der Lernkurve kompensiert, sondern zum Beispiel mit einer Positions- bzw. Phasenverschiebung von -1, so ergibt sich die Kurve 302 und das Kompensationsergebnis wird für diesen Drehzahlbereich wieder geringer. Dies wiederholt sich mit Positions- bzw. Phasenverschiebungen bis -5 mit entsprechend vorteilhafter Amplitudenanpassung bis an die Arbeitsbereichsgrenze der Walze von 350 min-1. Das Gleiche geschieht in der anderen Richtung zu niedrigeren Drehzahlen hin mit positiven Phasenverschiebungen von +1 ... +6 Positionen und entsprechender Amplitudenanpassung,

Bei Drehzahlen unterhalb von 25 U/min 303 wird z. B. keine Kompensation mehr durchgeführt, da in diesem Bereich die Störungen bereits sehr gering sind. So ergibt sich das in Figur 3 aufgezeigte Bild von Kurvenscharen. Verbindet man die Kurven jeweils an deren Schnittpunkten, dann ergibt sich die fett gezeichnete Zackenkurve bzw. sog. "HÜllkurve" als Kompensations-Fehlerspektrum.

Eine positive Phasenverschiebung von +1 bedeutet, dass an der aktuellen Position n mit dem Lernkurvenwert der Position n+1 kompensiert wird. Eine negative Phasenverschiebung von -1 bedeutet somit, dass zur Kompensation der Lernkurvenwert der Position n-1 verwendet wird, jeweils in vorteilhafter Weise mit einer ggf. unterschiedlichen Amplitudenanpassung. Beispielsweise wird an den Rändern der "Hüllkurve", d.h. sehr niedrige oder sehr hohe Drehzahlen, eine Kompensation bzgl. der Amplitude von lediglich 30 % des ursprünglichen Amplitudenwertes der "Lernkurve" verwendet.

Einmalig werden die genauen Drehzahlwerte an den Überkreuzungspunkten 304, 305 der aneinander liegenden Kurven bestimmt und diesen Drehzahlen eine exakte Positionsdifferenzzeit als Eckzeit zugewiesen. Zwischen jeweils zwei Eckzeiten 304, 305 gilt somit eine fest definierte Phasenverschiebung und ein fest definierter Amplitudenwert. In Figur 3 gilt zum Beispiel zwischen der Eckzeit 304 und 305 (n = 250 ... 292 min-1) eine Phasenverschiebung von -3 Positionen und ein Amplitudenwert von 0,87 bezogen auf die Lernkurvenwerte.

Bei negativen Drehzahlen, also beim Reversieren des Antriebes, lässt sich generell das erfindungsgemäße Verfahren ebenfalls in vorteilhafter Weise anwenden. Durch Verwendung einer Lernkurve mit positiver Drehzahl nk beim Reversieren ist das Kompensationsergebnis etwas schlechter als bei positiven Drehzahlen. Wird ein zweites Kompensationsspektrum mit einer Lernkurve bei negativer Drehzahl nkneg eingelernt und mit diesen Werten des Spektrums kompensiert, so werden gleich gute Ergebnisse wie bei positiver Drehzahl erreicht. Durch den eingeschränkten Drehzahlbereich beim Reversieren werden diese Ergebnisse noch verbessert.

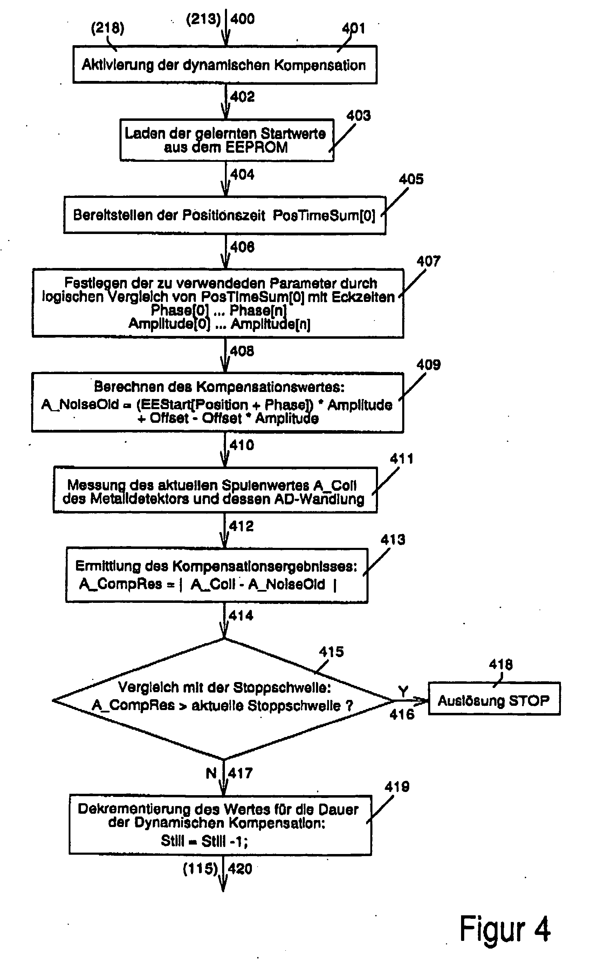

In Figur 4 ist ein detaillierter logischer Signalflussplan für eine beispielhafte dynamische Kompensation dargestellt. Ausgehend von einer Aktivierung 213, 400 der dynamischen Kompensation 218, 401, entsprechend der Figur 2 und der Figur 4, wird ein Zyklus zur dynamischen Kompensation gestartet 402.

Die Lernkurve wird aus dem resistenten Speicher ausgelesen 403 und für die weitere Berechnung bereitgestellt 404. Als nächstes wird z. B. die Positionszeit PosTimeSum[0], die bereits in 206 (Figur 2) ermittelt wurde, bereitgestellt 405, 406. Anhand eines logischen Vergleiches zwischen den festgelegten Eckzeitbereichen (z. B. zwischen 304 und 305) und der Positionszeit PosTimeSum[0] 405 werden in 407 z. B. die entsprechenden Phasen- und Amplitudenparameter zugeordnet 408.

In 409 erfolgt die Berechnung des dynamischen Kompensationswertes. Dieser Kompensationswert ist z. B. die gleiche Variable A_NoiseOld, die auch bei der statischen Kompensation verwendet wird. Hierbei wird ihr jedoch nicht der eine Umdrehung zurück liegende Wert zugeordnet, sondern der z. B. um die Phasenposition verschobene und in der Amplitude angepasste Lernwert 404 verwendet 410. Der digitalisierungsbedingte Offset wird in dieser Formel 409 mit berücksichtigt.

Jetzt wird in vorteilhafter Weise die aktuelle Spulenspannung A_Coil des Metalldetektors gemessen 411 und digitalisiert 412. Anschließend folgt z. B. die eigentliche Kompensation 413 durch die betragsmßige Subtraktion des Kompensationswertes A-NoiseOld vom aktuellen Spulenwert A_Coil zum Kompensationsergebnis A_CompRes 414.

Dieses Kompensationsergebnis A_CompRes (414) wird z. B. in 415 mit der aktuellen Stoppschwelle verglichen. Überschreitet das Kompensationsergebnis diese Stoppschwelle 416, dann wird der Einzug der Maschine unverzüglich gestoppt 418. Ist dies nicht der Fall 417, so wird z B die Dauer der dynamischen Kompensation, als Anzahl der Positionen Still, um einen Zähler vermindert 419 und die Abfrage des Positionsgeber aktiviert (115 in Figur 1, 420).

In Figur 5 ist ein weiteres Ausführungsbeispiel dargestellt. Hierbei sind beispielhaft fünf vereinfachte und abzuspeichernde Kompensationskurven bei fünf unterschiedlichen Drehzahlen längs einer ganzen Umdrehung, d. h. 360°, einer Förderwalze eines Schneidwerks bei einem-Feldhäcksler dargestellt. Die durchgezogene Linie ist beispielsweise bei einer Drehzahl von n=20 U/min, die Strich-Punkt--Line mit größter Amplitude bei einer-Drehzahl n=160 U/min und die Strich-Zweipunkt-Linie bei einer Drehzahl von n=320 U/min erfasst und gemäß der Erfindung in vorteilhafter Weise abgespeichert.

Gemäß der Erfindung werden nun im Betrieb des Förderwerks beispielsweise diese gespeicherten Kompensationsinformationen bzw. Normierungs-Störinformationen bei entsprechenden Ist-Drehzahlen des Förderwerks bzw. der Förderwalze mit der jeweiligen zugehörigen Kurve kompensiert. Darüber hinaus wird nicht nur beispielsweise die Kompensationskurve bei einer Drehzahl von 20 U/min bei einer Ist-Drehzahl von 20 U/min herangezogen, sondern vielmehr wird diese Kompensationskurve bei n=20 U/min z. B. für den kleinsten Ist-Drehzahlbereich beispielsweise von 0 bis 30 U/min verwendet.

Bei einer Ist-Drehzahl ab n=31 U/min wird dann in vorteilhafter Weise die Kompensation mit der zweiten Kompensationskurve, d. h. die Kompensationskurve, die in der Normierungsphase bei n=40 U/min erfasst und abgespeichert wurde, herangezogen. Diese zweite Kompensationskurve wird für den Bereich beispielsweise von 31 bis 60 U/min verwendet. Bei höheren Drehzahlen ab n=61 U/min bis beispielsweise n=120 U/min wird dann die Kompensation mit der Normierungskurve bzw. Kompensationskurve verrechnet, die bei einer Normierungsdrehzahl von n=80 U/min erfasst und abgespeichert wurde.

Entsprechend wird die Kompensationskurve, die bei einer Normierungsdrehzahl von 160 U/min erfasst und abgespeichert wurde, für einen Ist-Drehzahl-Bereich von n=121 bis 240 U/min für die Kompensation gemäß der Erfindung herangezogen. Darüber hinaus wird die Kompensation mit der Kompensationskurve durchgeführt, die bei der Normierungsdrehzahl von n=320 U/min erfasst und abgespeichert wurde.

Es hat sich gezeigt, dass beispielsweise mit fünf entsprechend abgespeicherten Kompensationskurven wie in Figur 5 beispielhaft dargestellt und kurz erläutert wurde, eine ausgesprochen gute Kompensation über den gesamten Drehzahlbereich sowohl bei einem statischen, d. h. nahezu unveränderten Betrieb des Förderwerks, als auch bei einer positiven oder negativen Beschleunigung des Förderwerks bzw. der Förderwalze und auch bei entsprechendem Reversierbetrieb erreicht wird.

Gemäß der Erfindung kann somit eine hohe Empfindlichkeit bzw. Betriebssicherheit nicht nur bei statischem Betrieb, sondern auch bei dynamischem bzw. beschleunigendem Betrieb und auch beim Reversierbetrieb des Förderwerks realisiert werden, ohne dass eine Veränderung der Ansprechschwellwerte des Fremdkörperdetektors notwendig ist.

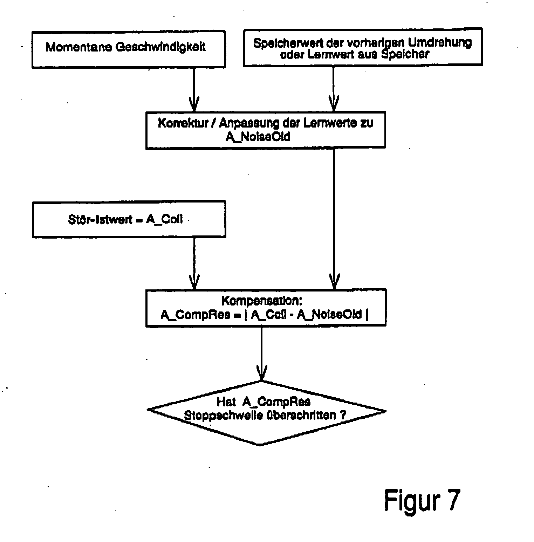

Figur 7 soll das Prinzip der dargelegten Kompensation gemäß der Erfindung nochmals kurz zusammengefasst schematisch darstellen.

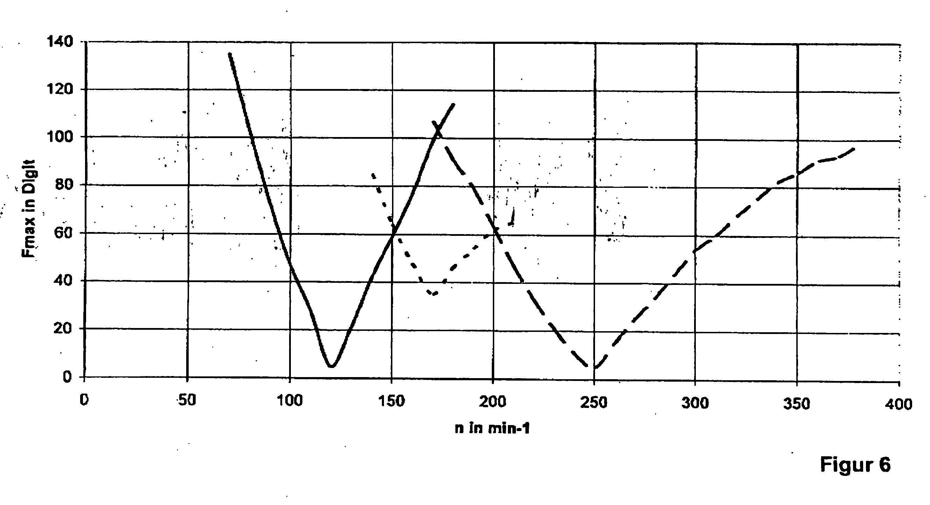

In Figur 6 ist eine Grafik für ein weiteres Ausführungsbeispiel dargestellt, die im Prinzip etwa Figur 3 entspricht, d.h. in der die maximalen Korrekturfehler in sogenannten "Digiteinheiten" über der Drehzahl der Förderwalze abgebildet sind. Im Unterschied zur Figur 3 wird jedoch nicht nur eine einzige Kompensationskurve bei n=160 U/min für die Kompensation über den gesamten Drehzahlbereich verwendet, sondern beim Ausführungsbeispiel gemäß Figur 6 werden in vorteilhafter Weise zwei gespeicherte Kompensationskurven verwendet. Einerseits eine Kompensationskurve bei einer Normierungsdrehzahl von n=120 U/min und eine zweite Kompensationskurve bei einer Normierungsdrehzahl von n=250 U/min. Dementsprechend ist zu erkennen, dass der maximal mögliche Fehler der erfindungsgemäßen Kompensation bei den Drehzahlen 120 U/min und 250 U/min am geringsten ist. Dies entspricht den Tiefpunkten der beiden entsprechenden rechten und linken Kurven und weist auf die qualitativ besten Kompensationen hin.

Die zwischen diesen beiden Güte- bzw. Fehler-Kurven dargestellte dritte, punktierte Güte- bzw. Fehler-Kurve, mit einem Tiefpunkt bei etwa 170 U/min, stellt eine um (minus) zwei Positionen (von insgesamt 25 über dem Umfang verteilten Positionen) verschobene und eine Amplitudenänderung um einen Faktor 1,125 angepasste Kompensation dar.

Der Wechsel der Kompensation von der ersten, durchgezogenen Kurve erfolgt bei einer Drehzahl von etwa 155 U/min und der Wechsel von der zweiten auf die dritte, gestrichelte Kurve gemäß Figur 6 erfolgt bei etwa einer Drehzahl von ca. 200 U/min. Auch hier wird deutlich, dass ein maximaler Kompensationsfehler von etwa 60 Digiteinheiten über den größten Teil des Drehzahlbereichs der Förderwalze realisierbar ist. Dies entspricht etwa einer Verbesserung um den Faktor sechs gegenüber dem Stand der Technik bei beschleunigtem Betrieb.

Bei einer Kompensation über den gesamten Drehzahlbereich der Förderwalze mit beispielsweise fünf Kompensationskurven gemäß dem Ausführungsbeispiel der Figur 5 kann noch eine deutlich bessere Kompensation erreicht werden. So wären bei einer derartigen Kompensation mit fünf abgespeicherten bzw. hinterlegten Kompensationskurven für die Drehzahlen 20, 40, 80, 160 sowie 320 U/min die Schnittpunkte der maximaler Kompensationsfehler noch deutlich geringer/kleiner als dies mit den zwei bzw. drei in Figur 6 verwendeten Kompensationskurven dargelegt ist.

Es ist auch denkbar, mehrere, gleichmäßig über den gesamten Drehzahlbereich des Förderwerks bzw. des Schneidwerks verteilte, abgespeicherte bzw. hinterlegte Kompensationskurven zu verwenden, z. B. für die Drehzahlen 50, 100, 150, 200, 250 300 sowie 350 U/min. Auch ist bei entsprechend großen (elektronischen) Speichern und ggf. schnellen Prozessoren oder dergleichen denkbar, eine Vielzahl von erfingdungsgemäß abgespeicherten bzw. hinterlegten Kompensationskurven jeweils zugehöriger Fördergeschwindigkeit bzw. Drehzahl verwenden. Beispielsweise könnten in Drehzahlschritten nicht nur wie zuvor dargelegt von 50 U/min, sondern sogar z. B. von 5 oder 10 U/min die jeweiligen Kompensationskurven gemäß-der Erfindung abgespeichert und entsprechend verwendet werden.

In vorteilhafter Weise reduziert sich der maximal mögliche Kompensationsfehler (d. h. die Schnittpunkte bei einer Darstellung entsprechend den Figuren 3 oder 6) je größer die Anzahl an abgespeicherten bzw. hinterlegten Kompensationskurven mit zugehöriger Drehzahl ist.

Grundsätzlich ist auch denkbar, dass das Aufnehmen bzw. Erfassen und Abspeichern der vorteilhaften Kompensationskurven mit zugehöriger Drehzahl, d. h. die Normierung bzw. das "Lernen", zum einen vom Hersteller z. B. im Werk oder einer Werkstatt ggf. (halb-) manuell oder aber auch zum anderen durch den Nutzer weitestgehend automatisiert durchgeführt werden kann. Bei Letzterem ist denkbar, dass durch ein Auslösen durch den Nutzer, z.B. ein Betätigen einer Startfunktion, das Förderwerk im Leerlauf (ohne Erntegut in der Maschine) die jeweiligen vorgegebenen Drehzahlen schrittweise "anfährt", d. h. kurz z. B. auf 120 U/min hochfährt und kurzzeitig während der Normierung bzw. Speicherung konstant dreht, und hierbei die entsprechende Kompensationsinformationen/-kurve aufnimmt und gemäß der Erfindung mit der zugehörigen Drehzahl abspeichert. Anschließend fährt das Förderwerk automatisch auf eine weitere Drehzahl, z. B. 250 U/min (vgl. Bsp. aus Figur 6), und speichert wiederum die entsprechende Kompensationsinformationen/-kurve für diese Drehzahl gemäß der Erfindung ab. Hierbei werden ggf. für die Kompensation benötigte/verwendete bereits früher abgespeicherte Informationen bzw. Werte in vorteilhafter Weise überspielt bzw. überschrieben.

Nach Beendigung dieser Normierungsphasebzw. "Lernphase" ist der Feldhäcksler aktualisiert. Mögliche Veränderungen bei den Störinformationen können mit einem derartigen vorteilhaften Vorgehen von Zeit zu Zeit immer wieder ausgeglichen werden, wie z. B. Beeinträchtigungen bzw. Abnützungen wie "Verbeulungen" etc. der Förderwalze bei einem Feldhäcksler. Möglicherweise kann eine derartige Aktualisierung der abgespeicherten bzw. hinterlegten Kompensationsinformationen/- kurven mit jeweils zugehöriger Fördergeschwindigkeit bzw. Drehzahl vor jedem Arbeitseinsatz, d. h. auf jedem Feld vor dem Ernten, oder vor jeder neuen Erntesaison durchgeführt werden.

## Patentansprüche

1. Landwirtschaftliche Maschine, insbesondere Feldhäcksler oder dergleichen, mit einem Förderwerk zum Befördern von Erntegut und mit einem Fremdkörperdetektor, insbesondere Metalldetektor, zum Erfassen von Fremdkörperinformationen eines Fremdkörpers, insbesondere Metallelementes, im Erntegut und von überlagerten Störinformationen, wobei der Fremdkörperdetektor wenigstens eine Kompensationseinheit zum wenigstens teilweisen Kompensieren der Störinformationen mit Hilfe von Kompensationsinformationen umfasst, wobei wenigstens ein nicht-flüchtiger bzw. permanenter oder semipermanenter Kompensationsspeicher zum Speichern der digitalen bzw. elektronischen Kompensationsinformationen vorgesehen ist, wobei ein Geschwindigkeitssensor zum Erfassen der Fördergeschwindigkeit und/oder Drehzahl des Förderwerks vorgesehen ist, **dadurch gekennzeichnet, dass** der Kompensationsspeicher ein nicht-flüchtiger bzw. permanenter oder semipermanenter Geschwindigkeitsspeicher zur Speicherung digitaler bzw. elektronischer Informationen mit einer im Kompensationsspeicher abgespeicherten, zugeordneten Fördergeschwindigkeit und/oder Drehzahl des Förderwerks ist, wobei die digitalen bzw, elektronischen Kompensationsinformationen mit einer zugeordneten Fördergeachwindigkeit und/oder Drehzahl des Förderwerks im Kompensationsspeicher abgespeichert sind.

2. Maschine nach Anspruch 1, **dadurch gekennzeichnet, dass** wenigstens ein Stellungssensor zum Erfassen der Stellung des Förderwerks vorgesehen ist und dass der Kompensationsspeicher ein Stellungsspeicher zum Speichern der Kompensationsinformationen mit der im Kompensationsspeicher abgespeicherten, zugeordneten Stellung des Förderwerks ist.

3. Maschine nach einem der vorgenannten Ansprüche, **dadurch gekennzeichnet, dass** die Kompensationsinformationen in einer Normierungsphase erfasste Normierungs-Störinformationen mit einer zugeordneten Fördergeschwindigkeit und/oder Drehzahl des Förderwerks sind.

4. Maschine nach einem der vorgenannten Ansprüche, **dadurch gekennzeichnet, dass** innerhalb einer Arbeitsphase des Förderwerks die Normierungn-Störinformationen unverändert abgespeichert im Kompensationsspeicher sind.

5. Maschine nach einem der vorgenannten Ansprüche, **dadurch gekennzeichnet, dass** die Arbeitsphase wenigstens eine Erntephase der landwirtschaftlichen Maschine ist.

6. Maschine nach einem der vorgenannten Ansprüche, **dadurch gekennzeichnet, dass** der Geschwindigkeitsspeicher wenigstens erste Normierungs-Störinformationen mit zugeordneter erster Fördergeschwindigkeit und/oder erster Drehzahl sowie zweite Normierungs-Störinformationen mit zugeordneter zweiter Fördergeschwindigkeit und/oder zweiter Drehzahl des Förderwerks umfasst.

7. Maschine nach einem der vorgenannten Ansprüche, **dadurch gekennzeichnet, dass** ein Gesamtbereich vom Stillstand bis zur maximalen Fördergeschwindigkeit und/oder Drehzahl des Förderwerks mehrere Geschwindigkeitsabschnitte aufweist, wobei innerhalb eines jeden Geschwindigkeitsabschnitts einheitliche Kompensationsinformationen und/oder Normierungs-Störinformationen mit zugeordneter Fördergeschwindigkeit und/oder Drehzahl vorgesehen sind.

8. Maschine nach einem der vorgenannten Ansprüche, **dadurch gekennzeichnet, dass** die Geschwindigkeitsabschnitte unterschiedliche Kompensationsinformationen und/oder Normierungs-Störinformationen mit zugeordneter unterschiedlicher Fördergeschwindigkeit und/oder Drehzahl aufweisen.

9. Maschine nach einem der vorgenannten Ansprüche, **dadurch. gekennzeichnet, dass** wenigstens eine Vorrichtung zum Erfassen einer Beschleunigung oder Beschleunigungsphase des Förderwerks vorgesehen ist.

10. Maschine nach einem der vorgenannten Ansprüche, **dadurch gekennzeichnet, dass** die Kompensationseinheit derart ausgebildet ist, dass wenigstens innerhalb der Beschleunigungsphase des Förderwerks die Störinformationen mit den Normierungs-Störinformationen wenigstens teilweise kompensiert sind.

11. Maschine nach einem der vorgenannten Ansprüche, **dadurch gekennzeichnet, dass** die Kompensationseinheit wenigstens eine verschiebeeinheit zum Verschieben der Stellung der Kompensationsinformationen um eine Stellungsdifferenz aufweist.

12. Maschine nach einem der vorgenannten Ansprüche, **dadurch gekennzeichnet, dass** die Kompensationseinheit wenigstens eine Wertänderungseinheit zum Ändern der Wertgröße der Kompensationsinformationen und/oder Normierungs-Störinformationen aufweist.

13. Verfahren zum Betreiben einer landwirtschaftlichen Maschine, insbesondere Feldhäcksler oder dergleichen, mit einem Förderwerk zum Befördern von Erntegut und mit einem Fremdkörperdetektor, insbesondere Metalldetektor, zum Erfassen von Fremdkörperinformationen eines Fremdkörpers und von überlagerten Störinformationen, insbesondere Metallelementes, im Erntegut, wobei der Fremdkörperdetektor wenigstens eine Kompensationseinheit zum wenigstens teilweisen Kompensieren der Störinformationen mit Hilfe von Kompensationsinformationen umfasst, wobei wenigstens ein nicht-flüchtiger bzw. permanenter oder semipermanenter Kompensationsspeicher zum Speichern der digitalen bzw. elektronischen Kompensationsinformationen vorgesehen ist, wobei ein Geschwindigkeitssensor zum Erfassen der Fördergeschwindigkeit und/oder Drehzahl des Förderwerks vorgesehen ist, **dadurch gekennzeichnet, dass** die digitalen bzw. elektronischen Kompensationsinformationen mit einer zugeordneten Fördergeschwindigkeit und/oder Drehzahl des Förderwerks im Kompensationsspeicher abgespeichert werden.

## Claims

1. An agricultural machine, in particular a forage harvester or the like, comprising a conveyor mechanism for conveying crop material and a foreign body detector, in particular a metal detector, for acquiring foreign body information of a foreign body, in particular a metal element, in the crop material, and superposed interference information, wherein the foreign body detector includes at least one compensation unit for at least partially compensating for the interference information by means of compensation information, wherein there is provided at least one non-volatile or permanent or semi-permanent compensation storage means for storage of the digital or electronic compensation information, wherein there is provided a speed sensor for detecting the conveyor speed and/or the rotary speed of the conveyor mechanism, **characterised in that** the compensation storage means is a non-volatile or permanent or semi-permanent speed storage means for the storage of digital or electronic information with an associated conveyor speed and/or rotary speed of the conveyor mechanism, that is stored in the compensation storage means, wherein the digital or electronic compensation information is stored with an associated conveyor speed and/or rotary speed of the conveyor mechanism in the compensation storage means.

2. A machine according to claim 1 **characterised in that** there is provided at least one position sensor for detecting the position of the conveyor mechanism and the compensation storage means is a position storage means for storage of the compensation information with the associated position of the conveyor mechanism, that is stored in the compensation storage means.

3. A machine according to one of the preceding claims **characterised in that** the compensation information is standardising interference information detected in a standardising phase with an associated conveyor speed and/or rotary speed of the conveyor mechanism.

4. A machine according to one of the preceding claims **characterised in that** within a working phase of the conveyor mechanism the standardising interference information is stored unchanged in the compensation storage means.

5. A machine according to one of the preceding claims **characterised in that** the working phase is at least one harvesting phase of the agricultural machine.

6. A machine according to one of the preceding claims **characterised in that** the speed storage means includes at least first standardising interference information with associated first conveyor speed and/or first rotary speed and second standardising interference information with associated second conveyor speed and/or second rotary speed of the conveyor mechanism.

7. A machine according to one of the preceding claims **characterised in that** an overall range from stationary to the maximum conveyor speed and/or rotary speed of the conveyor mechanism has a plurality of speed portions, wherein provided within each speed portion is unitary compensation information and/or standardising interference information with associated conveyor speed and/or rotary speed.

8. A machine according to one of the preceding claims **characterised in that** the speed portions have different items of compensation information and/or standardising interference information with associated different conveyor speed and/or rotary speed.

9. A machine according to one of the preceding claims **characterised in that** there is provided at least one device for detecting an acceleration or acceleration phase of the conveyor mechanism.

10. A machine according to one of the preceding claims **characterised in that** the compensation unit is so adapted that the interference information is at least partially compensated with the standardising interference information at least within the acceleration phase of the conveyor mechanism.

11. A machine according to one of the preceding claims **characterised in that** the compensation unit has at least one displacement unit for displacement of the position of the compensation information by a position difference.

12. A machine according to one of the preceding claims **characterised in that** the compensation unit has at least one value change unit for changing the value of the compensation information and/or standardising interference information.

13. A method of operating an agricultural machine, in particular a forage harvester or the like, comprising a conveyor mechanism for conveying crop material and a foreign body detector, in particular a metal detector, for acquiring foreign body information of a foreign body and superposed interference information, in particular a metal element, in the crop material, wherein the foreign body detector includes at least one compensation unit for at least partially compensating for the interference information by means of compensation information, wherein there is provided at least one non-volatile or permanent or semi-permanent compensation storage means for storage of the digital or electronic compensation information, wherein there is provided a speed sensor for detecting the conveyor speed and/or the rotary speed of the conveyor mechanism, **characterised in that** the digital or electronic compensation information is stored with an associated conveyor speed and/or rotary speed of the conveyor mechanism in the compensation storage means.

## Revendications

1. Machine agricole, en particulier ensileuse ou analogue, dotée d'un dispositif de transport pour transporter un produit de récolte et d'un détecteur de corps étrangers, en particulier d'un détecteur de métaux, pour enregistrer des informations de corps étranger d'un corps étranger, en particulier d'un élément métallique, dans le produit de récolte et des informations parasites superposées, le détecteur de corps étrangers comprenant au moins une unité de compensation pour compenser au moins partiellement les informations parasites à l'aide d'informations de compensation, au moins une mémoire de compensation non volatile, respectivement permanente ou semi-permanente, étant prévue pour stocker les informations de compensation numériques ou électroniques, un capteur de vitesse étant prévu pour enregistrer la vitesse de transport et/ou la vitesse de rotation du dispositif de transport, **caractérisée en ce que** la mémoire de compensation est une mémoire de vitesses non volatile, respectivement permanente ou semi-permanente, pour stocker des informations numériques ou électroniques avec une vitesse de transport et/ou une vitesse de rotation associée du dispositif de transport stockée dans la mémoire de compensation, les informations de compensation numériques ou électroniques étant stockées dans la mémoire de compensation avec une vitesse de transport et/ou une vitesse de rotation associée du dispositif de transport.

2. Machine selon la revendication 1, **caractérisée en ce qu'**au moins un capteur de position est prévu pour enregistrer la position du dispositif de transport et **en ce que** la mémoire de compensation est une mémoire de positions pour mémoriser les informations de compensation avec la position associée du dispositif de transport stockée dans la mémoire de compensation.

3. Machine selon une des revendications précédentes, **caractérisée en ce que** les informations de compensation sont des informations parasites de normalisation acquises dans une phase de normalisation avec une vitesse de transport et/ou une vitesse de rotation associée du dispositif de transport.

4. Machine selon une des revendications précédentes, **caractérisée en ce que**, dans une phase de travail du dispositif de transport, les informations parasites de normalisation sont stockées sans modification dans la mémoire de compensation.

5. Machine selon une des revendications précédentes, **caractérisée en ce que** la phase de travail est au moins une phase de récolte de la machine agricole.

6. Machine selon une des revendications précédentes, **caractérisée en ce que** la mémoire de vitesses comprend au moins des premières informations parasites de normalisation avec une première vitesse de transport et/ou de rotation associée ainsi que des deuxièmes informations parasites de normalisation avec une deuxième vitesse de transport et/ou de rotation associée du dispositif de transport.

7. Machine selon une des revendications précédentes, **caractérisée en ce qu'**une plage totale allant de l'arrêt à la vitesse de transport et/ou de rotation maximale du dispositif de transport comprend plusieurs portions de vitesse, dans chaque portion de vitesse étant prévues des informations de compensation et/ou des informations parasites de normalisation uniformes avec une vitesse de transport et/ou de rotation associée.

8. Machine selon une des revendications précédentes, **caractérisée en ce que** les portions de vitesse comprennent des informations de compensation et/ou des informations parasites de normalisation différentes avec une vitesse de transport et/ou de rotation associée différente.

9. Machine selon une des revendications précédentes, **caractérisée en ce qu'**au moins un dispositif pour enregistrer une accélération ou une phase d'accélération du dispositif de transport est prévu.

10. Machine selon une des revendications précédentes, **caractérisée en ce que** l'unité de compensation est conçue de façon que, au moins dans la phase d'accélération du dispositif de transport, les informations parasites soient au moins partiellement compensées par les informations parasites de normalisation.

11. Machine selon une des revendications précédentes, **caractérisée en ce que** l'unité de compensation comprend au moins une unité de décalage pour décaler la position des informations de compensation d'une différence de position.

12. Machine selon une des revendications précédentes, **caractérisée en ce que** l'unité de compensation comprend au moins une unité de modification de valeur pour modifier la valeur des informations de compensation et/ou des informations parasites de normalisation.

13. Procédé pour faire fonctionner une machine agricole, en particulier une ensileuse ou analogue, dotée d'un dispositif de transport pour transporter un produit de récolte et d'un détecteur de corps étrangers, en particulier d'un détecteur de métaux, pour enregistrer des informations de corps étranger d'un corps étranger, en particulier d'un élément métallique, dans le produit de récolte et des informations parasites superposées, le détecteur de corps étrangers comprenant au moins une unité de compensation pour compenser au moins partiellement les informations parasites à l'aide d'informations de compensation, au moins une mémoire de compensation non volatile, respectivement permanente ou semi-permanente, étant prévue pour stocker les informations de compensation numériques ou électroniques, un capteur de vitesse étant prévu pour enregistrer la vitesse de transport et/ou la vitesse de rotation du dispositif de transport, **caractérisé en ce que** les informations de compensation numériques ou électroniques sont stockées dans la mémoire de compensation avec une vitesse de transport et/ou de rotation associée du dispositif de transport.
